# EUROPEAN PATENT APPLICATION

(11) **EP 4 848 256 A1**
(43) Date of publication of application: **02.12.2026**
(21) Application number: 26177135.6
(22) Date of filing: 07.05.2026
(51) Int. Cl.: G09B 19/00

(54) **VIRTUAL GOLF CADDIE FOR IMPROVING PLAYER PERFORMANCE**

(30) Priority: 28.05.2025 US 202519221070
(71) Applicant: Rapsodo Pte. Ltd., Singapore 139964 (SG)
(72) Inventor: BOLAT, Burak, 139964 Singapore (SG); OKUR, Batuhan, 259289 Singapore (SG)
(74) Representative: Forresters IP LLP

(57) **Abstract**

The present disclosure relates to methods for improving player's performance. In some embodiments, the method comprises: obtaining golf club data, shot parameters and golf course information; determining a shot recommendation based on the golf club data, shot parameters and golf course information, including: generating a 3D model of the golf course based on the golf course information; measuring a discrepancy for each shot parameter; for each club of a plurality of clubs and each golf ball position of a plurality of ball positions: simulating a flight of a plurality of sample shots in different shot directions based on the club data, the measured discrepancy for each shot parameter, the 3D model of the golf course and the golf ball position; determining a risk level for each sample shot; determining a least risky shot for the selected club and golf ball position based on the determined risk level; and generating a shot recommendation based on the risk level.

## Description

### CROSS-REFERENCE TO RELATED APPLICATIONS

The present application claims the benefit of US Application No. 19/221,070, entitled "VIRTUAL GOLF CADDIE FOR IMPROVING PLAYER PERFORMANCE", which was filed on May 28, 2025, which is hereby incorporated herein by reference.

### TECHNICAL FIELD

The disclosed embodiments are related to virtual golf environments for improving player performance.

### BACKGROUND

A golf caddie (or caddy) provides strategic guidance to a player on the golf course. For example, the caddie can provide insight to the players on, among others, providing course strategy, advice on club selection, read greens and evaluate weather conditions. Virtual golf environments have been developed to assist players in improving their golf performance. Like a real-world golf course, virtual golf environments can benefit from a virtual caddie that mimics the decision-making of a human golf caddie.

### SUMMARY

Embodiments are disclosed for a virtual golf caddie for improving player performance.

In some embodiments, a method comprises: obtaining, with at least one processor, golf club data, shot parameters and golf course information; determining, with the at least one processor, a shot recommendation based on the golf club data, shot parameters and golf course information, including: generating a three-dimensional (3D) model of the golf course based on the golf course information; measuring a discrepancy for each shot parameter; for each club of a plurality of clubs and each golf ball position of a plurality of ball positions: simulating a flight of a plurality of sample shots in different shot directions based on the club data for the club, the measured discrepancy for each shot parameter, the 3D model of the golf course and the golf ball position; determining a risk level for each sample shot; determining a least risky shot for the selected club and golf ball position based on the determined risk level for each sample shot; determining a number of hops for each least risky shot; and generating, with the at least one processor, a shot recommendation based at least in part on the risk level and number of hops for the at least one least risky shot.

In some embodiments, the golf club data includes at least one of loft, lie angle or shaft properties.

In some embodiments, the shot parameters include at least one of launch angle, launch direction, spin axis, spin rate or ball speed.

In some embodiments, the discrepancy for each shot parameter is at least one of mean or variance of ball speed.

In some embodiments, the strategy is at least one of staying away from a hazard, landing on a fairway or landing on a green of the golf course.

In some embodiments, the method further comprises selecting an aggressiveness score that defines how risky a user wants to play, comparing the aggressiveness score against a threshold, and generating, with the at least one processor, a shot recommendation based at least in part on the risk level and number of hops for each of the least risky shots sorted based on the level of risk or number of hops.

In some embodiments, determining a least risky shot for the selected club and golf ball position in accordance with the strategy based on the determined risk level for each sample shot includes analyzing at least one of shot flight trajectories, golf ball landing patterns, obstacle avoidance or green accessibility.

In some embodiments, the method further comprises determining an optimal golf ball position for each least risky shot by analyzing landing patterns for the simulated golf ball trajectories, evaluating approach angles to the green, considering terrain features and hazards or calculating distances for subsequent shots, and including the optimal golf ball position in the shot recommendation.

In some embodiments, determining the least risky shot for the selected club and golf ball position in accordance with the strategy based on the determined risk level for each sample shot includes: generating a tree data structure including nodes representing possible shots, wherein a root node of the tree data structure represents a current shot location; generating branches from the root node, each branch representing a particular golf club selection and shot direction; and generating leaf nodes from the branches, each leaf node representing a shot landing on the green.

In some embodiments, the tree data structure is configured to grow by exploring possible subsequent shots with different clubs and shot directions.

In some embodiments, the growth of the tree data structure terminates when a leaf node each reached or a path through the tree data structure is pruned due to suboptimal performance.

In some embodiments, the tree data structure is pruned using a multi-level pruning approach that includes risk-based pruning and position-based pruning.

In some embodiments, after the tree data structure is completed, metrics are evaluated for the leaf nodes and paths through the tree data structure are identified based on a minimum number of shots required for the path and a lowest cumulative risk level among the paths with equal number of minimum shots.

In some embodiments, a total number of shots required to reach a leaf node and a cumulative risk score for the number of shots based on hazard proximity and shot difficulty is determined for each of the paths through the tree data structure.

In some embodiments, a single comprehensive risk factor is determined that captures traditional risk elements and a strategic position value for subsequent shot options and recovery possibilities.

Other embodiments are directed to systems, apparatuses and non-transitory, computer-readable storage mediums.

### BRIEF DESCRIPTION OF THE DRAWINGS

FIG. 1 illustrates a process for generating golf shot suggestions, according to one or more embodiments.
FIG. 2 illustrates use of a tree shot structure for golf shot analysis, according to one or more embodiments.
FIG. 3 further illustrates a method for generating the tree shot structure for golf shot analysis, according to one or more embodiments.
FIG. 4 illustrates a launch monitoring system for capturing golf shot parameters, according to one or more embodiments.

### DETAILED DESCRIPTION

The disclosed embodiments include a virtual golf environment with a virtual caddie to improve player performance.

In some embodiments, golf course information is obtained from various data sources (e.g., aerial photography. It is to be understood that aerial photography may generate images captured by one or more cameras positioned at an elevated position, typically from aircraft, drones, satellites, balloons, or other flying objects). In some embodiments, the golf course information includes course layout and topography data (e.g., elevation data). Course layout data can include but is not limited to data on key features like fairways, rough, greens, bunkers and water hazards.

In some embodiments, golf club data (e.g., loft, lie angle, shaft properties, length, weight and grip size) are obtained from, for example, manufacturer data sheets or online databases.

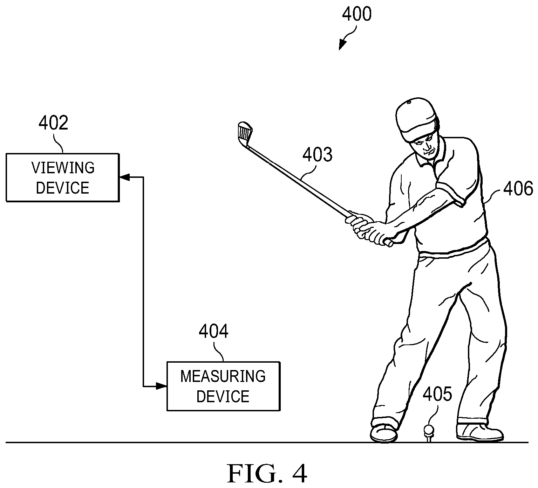

In some embodiments, shot parameter data is obtained by a launch monitoring system during a real-world golf session, where the user hit balls on the golf course with different swings and different target ranges using different clubs. In some embodiments, discrepancies between each shot are measured, such as the mean and variance of the ball speed. In some embodiments, the launch monitoring system can include one or more cameras, and at least one radar as described in reference to FIG. 4. In some embodiments, image data and radar data may be combined for further processing. Some examples of shot parameters include but are not limited to launch angle (vertical), launch direction (horizontal), spin axis, spin rate and ball speed. In some embodiments, shot parameters include at least one of launch angle (vertical), launch direction (horizontal), spin axis, spin rate, swing speed, carry distance, total distance and ball speed.

In some embodiments, geolocation data (e.g., GPS coordinates) is used to determine weather conditions at the golf course (e.g., wind, rain) as well as air pressure and humidity at the golf course. In some embodiments, geolocation data can be used to indicate real-time location of the golfer on the course, information on distance e.g. yardages to the green, course mapping and navigation, location of each shot for post-round analytics and for users' enhanced experience.

In some embodiments, a 3D ball trajectory simulator generates all possible ball landing scenarios based on the course information, golf club data and shot parameters. In some embodiments, each landing scenario is classified based on risk. For example, shots not landing on the green can be classified as risky shots and shots landing on the green can be classified as safe.

For each possible shot direction from the current shot location toward the green, the virtual caddie system generates a shot for each club by analyzing, for example, at least one of the ball trajectories, landing patterns, obstacle avoidance, green accessibility, etc. The virtual caddie system evaluates different clubs using the simulator, and generates a score for each club based on risk. For example, a second shot on hole 9 using a 9-iron might achieve a higher score (less risk) compared to other clubs.

In some embodiments, the virtual caddie system also determines optimal ball positions by analyzing landing patterns, evaluating approach angles to the green, considering terrain features and hazards, and calculating optimal distances to the hole for subsequent shots.

### Example Virtual Golf Caddie System

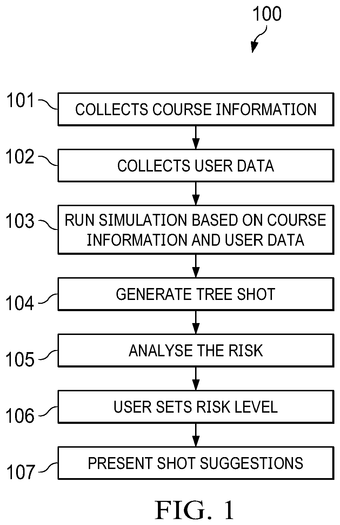

FIG. 1 illustrates a process 100 for generating golf shot suggestions, according to one or more embodiments. Process 100 includes collecting golf course information 101, collecting user data, where the user data includes golf club and golf shot parameter data 102, and running simulations of shots based on the golf course information, golf club data and shot parameter data 103. A tree shot data structure is generated 104 based on the results of the simulations. The cumulative risk for each path in the tree shot data structure, from a root node (current shot location) to a leaf node (e.g., representing a shot landing on the green) is determined 105. The user sets the risk level 106, and the virtual golf caddie presents shot suggestions to the user based on the user-selected risk level through, for example, a viewing device, such as the viewing device 402 shown in FIG. 4.

### Example Tree Shot Data Structure and Search Process

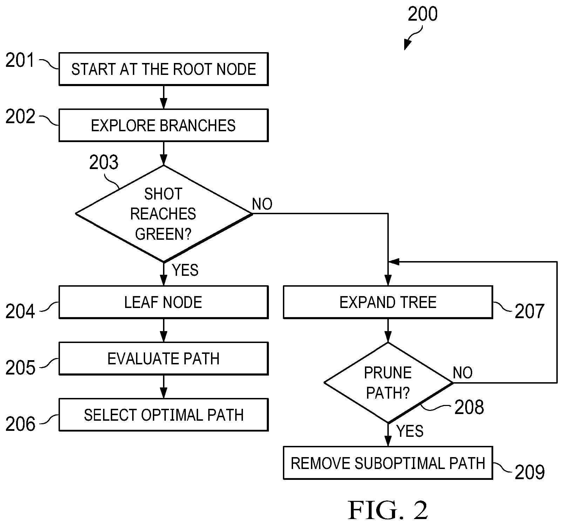

FIG. 2 illustrates use of a tree structure for golf shot analysis, according to one or more embodiments. In some embodiments, each node in the tree represents a possible shot, the root node indicates the current location of the ball and the player (collectively termed as "current location of the shot), and each branch represents a club selection and shot direction. Each leaf node coupled to a branch represents a shot landing on the green and ends the exploration for that particular path through the tree. In some embodiments, two key metrics are recorded for each path through the tree: the number of shots (shot sequence) taken to reach the green and the cumulative risk level for the shot sequence. In some embodiments, the tree grows (expands) by exploring all possible subsequent shots with different clubs and shot directions, and the growth terminates when either the shot reaches the green (becoming a leaf node) or the path is pruned due to suboptimal performance.

In some embodiments, the tree is pruned to improve efficiency through a multi-level pruning approach, where a first level of pruning includes risk-based pruning, and a second level of pruning includes position-based pruning. Risk-based pruning eliminates paths with high risk and no compensating benefits and removes paths that are demonstrably inferior to existing alternatives. Position-based pruning compares nodes at similar stages (e.g., both three shots in), and when two paths lead to nearby positions on the course, the relative risks of both paths are analyzed and only the safer path is retained if positions are sufficiently similar. For example, if two three-shot sequences end within a small radius of each other in the fairway, the riskier path is pruned.

In some embodiments, the virtual caddie system uses a comprehensive risk assessment model that incorporates an immediate shot risk and a strategic ball position. Some examples of immediate shot risk include but are not limited to traditional hazard proximity, shot difficulty, strategic position consequences, and recovery shot possibilities. Some examples of strategic ball position evaluation include but are not limited to a ball position on the left fairway with trees on the right receives a lower risk score than a centered position, positions offering multiple follow-up shot options receive lower risk scores, and positions that limit future shot options receive higher risk scores.

In some embodiments, a final risk score can then be calculated. In some embodiments, the final risk score combines direct shot risk (e.g., immediate hazards and difficulty), position quality (e.g., strategic value of landing location), and future shot implications (available options from landing position).

In some embodiments, a single unified risk factor can be used for simplicity and clarity. This unified risk factor captures both traditional risk elements (e.g., hazards, difficulty) and strategic position value (future shot options, recovery possibilities).

Upon completion of the tree, there are multiple leaf nodes representing various paths to the green. For each path, the virtual caddie system analyzes the total number of shots or "hops" required to reach the green and a cumulative risk score for the sequence of shots need to land on the green based on hazard proximity and shot difficulty.

A path through the tree is selected after construction of the tree is completed. The system evaluates metrics from all leaf nodes and identifies optimal paths based on a minimum number of shots required to reach the green and a lowest cumulative risk among paths with equal shot counts.

Referring to FIG. 2, a tree shot search process 200 starts at root node 201 and explores each branch 202 starting from root node 201 and ending at leaf node 204, where each node between the root node 201 and leaf node 204 represents a shot in a shot sequence to the green. Process 200 determines if the shot associated with the branch has hit the green, i.e., represented by leaf node 204. If the shot hit the green, the path from root node 201 (current shot location) to leaf node 204 (shot lands on green) is evaluated 205 to determine a number of shots in the shot sequence and the cumulative risk level of the path, which, in some embodiments, is the sum of the independent risk levels for each shot in the shot sequence. Process 200 is repeated for each shot. Upon completion of the evaluating 205 of each path through the tree, a path is selected 206 from all the evaluated paths and presented to the user as a suggested shot sequence from the current shot location to land on the green with specified amount risk. In some embodiments, the specified amount risk can be categorized such as, for example, low risk, moderate risk or high risk. Note that risk levels can be represented in any suitable manner including by text, color, scores, etc.

An example scenario will now be discussed as follows. In this example scenario, the distance to the green is 200 yards, and there are three available shot options: Shot A (3-iron, straight) associated with a high risk due to a water hazard; Shot B (5-iron, right) associated with a moderate risk due to bunker proximity; and Shot C (7-iron, layup) associated with a low risk with safe fairway position. Each shot is simulated, and the simulation results are as follows:
1. Shot A pathway: Reaches green in 2 shots but involves high risk follow-up shots
2. Shot B pathway: Requires 3 shots but offers moderate risk options
3. Shot C pathway: Requires 3 shots with low risk follow-up shots

Based on these results, shots B and C (both 3 shots with moderate and low risk, respectively) are determined to be superior to shot A (2 shots with high risk), and the virtual caddie system recommends shot C instead of shot B as providing the best combination of shot efficiency (same number of shots but with lower cumulative risk).

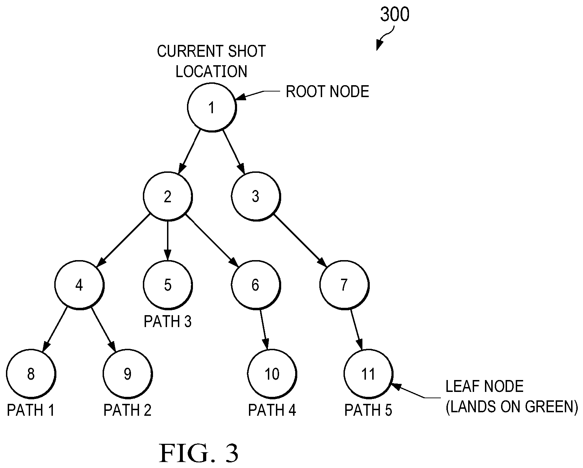

FIG. 3 further illustrates the tree shot structure for golf shot analysis, according to one or more embodiments. In this example, as can be seen from FIG. 3, there are 11 nodes. Node 1 is the root node representing the current shot location on the golf course. Nodes 8-11 (nodes 8, 9, 10 and 11) are leaf nodes representing five landing scenarios based on five different shot sequences. A first shot sequence forming "path 1" includes nodes 1, 2, 4 and 8. A second shot sequence forming "path 2" includes nodes 1, 2, 4 and 9. A third shot sequence forming "path 3" includes nodes 1, 2 and 5. A fourth shot sequence forming "path 4" includes nodes 1, 2, 6 and 10. A fifth shot sequence forming "path 5" includes nodes 1, 3, 7 and 11.

Referring to path 1, the user took four shots to reach the green. Each shot is associated with a risk level, which when summed together results in a cumulative risk level R1 for path 1. Referring to path 2, the user took four shots to reach the green. Each shot is associated with a risk level, which when summed together results in a cumulative risk level R2 for path 2. Referring to path 3, the user took three shots to reach the green, but the ball never reaches the green. Referring to path 4, the user took four shots to reach the green. Each shot is associated with a risk level, which when summed together results in a cumulative risk level R4 for path 4. Referring to path 5, the user took four shots to reach the green. Each shot is associated with a risk level R5, which when summed together results in a cumulative risk level for path 5.

With all the paths determined, the virtual caddie system selects one of the five paths based on the number of shots (nodes) that are needed starting from the current shot location (root node) to reach the green (leaf node), and the cumulative risk level for the path (the sum of the independent risks for each shot in the shot sequence). In this example, the shot sequence represented by path 3 is discarded because it failed to reach the green. The remaining paths 1, 2, 4 and 5 all have the same number of shots to reach the green. In this case, the path with the least cumulative risk is selected as the least risky path. In some embodiments, all of the shot sequences are presented to the user (e.g., via viewing device 402) with their cumulative risk so that the user can select the shot sequence they desire. In some embodiments, the system may provide the shot sequences arranged from low to high cumulative risk. In some embodiments, the user selected risk level can be used to filter out shot sequences that are higher than the user selected risk level. For example, if the risk for path 1 has a higher risk level (e.g., based on risk score) than the user-selected risk level, then path 1 would be discarded, i.e., not presented to the user.

FIG. 4 illustrates a launch monitoring system 400 for capturing golf shot parameters, according to one or more embodiments. Launch monitoring system 400 includes viewing device 402 (e.g., a computer display, mobile device display) wirelessly or wired coupled to measuring device 404. Measuring device 404 can include one or more video cameras (not shown) for capturing a swing of golf club 403 by user 406, and a flight trajectory of golf ball 405 after being struck by golf club 403. In some embodiments, measuring device 404 can also include one or more radar for measuring ball speed and other parameters (e.g., spin rate, spin axis).

As previously described, launch monitoring system can be used to obtain shot parameters and determine discrepancies (e.g., mean and variance) between the shot parameters, such as, for example, launch angle (vertical), launch direction (horizontal), spin axis, spin rate and ball speed. These shot parameters and discrepancies are used in combination with the golf course information and golf club data to simulate ball trajectories for shot sequences, as previously described in reference to FIGS. 1-3.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable sub combination. Moreover, although features may be described above as acting in certain combinations and even initially claimed as such, one or more features from a claimed combination can in some cases be excised from the combination, and the claimed combination may be directed to a sub combination or variation of a sub combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

## Claims

1. A method comprising:
obtaining, with at least one processor, golf club data, shot parameters and golf course information;
determining, with the at least one processor, a shot recommendation based on the golf club data, shot parameters and golf course information, including:
generating a three-dimensional (3D) model of the golf course based on the golf course information;
measuring a discrepancy for each shot parameter;
for each club of a plurality of clubs and each golf ball position of a plurality of ball positions:
simulating a flight of a plurality of sample shots in different shot directions based on the club data for the club, the measured discrepancy for each shot parameter, the 3D model of the golf course and the golf ball position;
determining a risk level for each sample shot;
determining a least risky shot for the selected club and golf ball position based on the determined risk level for each sample shot;
determining a number of hops for each least risky shot; and
generating, with the at least one processor, a shot recommendation based at least in part on the risk level and number of hops for the at least one least risky shot.

2. The method of claim 1, wherein the golf club data includes at least one of loft, lie angle or shaft properties.

3. The method of claim 1 or claim 2, wherein the shot parameters include at least one of launch angle, launch direction, spin axis, spin rate or ball speed.

4. The method of any preceding claim, wherein the discrepancy for each shot parameter is at least one of mean or variance of ball speed.

5. The method of any preceding claim, wherein the strategy is at least one of staying away from a hazard, landing on a fairway or landing on a green of the golf course.

6. The method of any preceding claim, further comprising:
selecting an aggressiveness score that defines how risky a user wants to play;
comparing the aggressiveness score against a threshold; and
generating, with the at least one processor, a shot recommendation based at least in part on the risk level and number of hops for each of the least risky shots sorted based on the level of risk or number of hops.

7. The method of any preceding claim, wherein determining a least risky shot for the selected club and golf ball position in accordance with the strategy based on the determined risk level for each sample shot includes analyzing at least one of shot flight trajectories, golf ball landing patterns, obstacle avoidance or green accessibility.

8. The method of any preceding claim, further comprising:
determining an optimal golf ball position for each least risky shot by analyzing landing patterns for the simulated golf ball trajectories, evaluating approach angles to the green, considering terrain features and hazards or calculating distances for subsequent shots; and
including the optimal golf ball position in the shot recommendation.

9. The method of any preceding claim, wherein determining the least risky shot for the selected club and golf ball position in accordance with the strategy based on the determined risk level for each sample shot includes:
generating a tree data structure including nodes representing possible shots, wherein a root node of the tree data structure represents a current shot location;
generating branches from the root node, each branch representing a particular golf club selection and shot direction; and
generating leaf nodes from the branches, each leaf node representing a shot landing on the green.

10. The method of claim 9, wherein the tree data structure is configured to grow by exploring possible subsequent shots with different clubs and shot directions.

11. The method of claim 10, wherein the growth of the tree data structure terminates when a leaf node each reached or a path through the tree data structure is pruned due to suboptimal performance.

12. The method of any one of claims 9 to 11, wherein the tree data structure is pruned using a multi-level pruning approach that includes risk-based pruning and position-based pruning; or wherein after the tree data structure is completed, metrics are evaluated for the leaf nodes and paths through the tree data structure are identified based on a minimum number of shots required for the path and a lowest cumulative risk level among the paths with equal number of minimum shots.

13. The method of any one of claims 9 to 12, wherein a total number of shots required to reach a leaf node and a cumulative risk score for the number of shots based on hazard proximity and shot difficulty is determined for each of the paths through the tree data structure.

14. The method of any preceding claim, wherein a single comprehensive risk factor is determined that captures traditional risk elements and a strategic position value for subsequent shot options and recovery possibilities.

15. A system comprising:
at least one processor;
memory storing instructions that when executed by the at least one processor, cause the at least one processor to perform operations comprising the steps defined in any one of claims 1 to 14.
